# EUROPEAN PATENT APPLICATION

(11) **EP 2 107 419 A1**
(43) Date of publication of application: **07.10.2009**
(21) Application number: 09156850.1
(22) Date of filing: 31.03.2009
(51) Int. Cl.: G03B 15/05, H04N 5/225

(54) **Lighting device for use with a camera**

(30) Priority: 02.04.2008 IT PR20080022
(71) Applicant: COEMAR S.p.A., 46042 Castel Goffredo MN (IT)
(72) Inventor: Allegri, Fabio, 46042, CASTEL GOFFREDO (MANTOVA) (IT)
(74) Representative: Gotra, Stefano

(57) **Abstract**

Lighting device (1) for use with a camera (2) comprising:
a light source (3);
a modulated signal (5) of a digital type for driving the light source (3);
power supply and control means (6) for powering the light source (3) and generating the modulated signal (5),

characterised in that said power supply and control means (6) regulate the modulated signal (5) in such a manner that the period of the modulated signal (5) is always equal to or less than the opening time (7) of the diaphragm of the camera (2).

## Description

The present invention relates to a lighting device for use with a camera. The device finds application in the entertainment sector (cinema, theatre, television), where correct lighting of the scene to be shot with a movie or television camera is essential. In particular, the device is used for the artificial lighting of indoor environments, such as professional television studios or stages.

As is known, there already exist commercially available lighting devices for the above-listed applications, in which the light source consists in LEDs, that is semiconductor devices (light emitting diodes).

Up to a few years ago, LEDs could emit sufficient light to be used almost exclusively as indicators in electronic equipment. Later, with the advent of high efficiency LEDs, it was possible to extend the use thereof to more versatile lighting apparatus. In fact, high efficiency LEDs are devices capable of emitting light (white or monochromatic) with a greater efficiency (and thus lower consumption) than incandescent lamps.

High efficiency LEDs are current driven and therefore, in order to vary their brightness (i.e. the quantity of light emitted), it is necessary to modify the current flowing through them. In particular, as recommended by the manufacturers, such LEDs must be driven by maximum current pulses of variable width. In this manner, for each period, the LEDs will always have the maximum current passing through them but the duration of the pulse will vary, as will the associated duty cycle.

If the pulse frequency is greater than 80-100 Hz (typically, frequencies between 200 and 600 Hz are chosen), the human eye does not perceive variations in brightness, but only the resulting average value. This is due to the persistence of the image on the retina, which acquires 24 frames per second. Furthermore, given that the pulses are always at the maximum current, not even the small chromatic variations that would occur in the case of a variable current are detected.

However, the drive frequencies normally chosen for the purpose of adapting to the human eye are not compatible for uses associated with shooting with television cameras. As is known, indeed, in order to shoot an image, a television camera scans the scene as many times as is required by the television standard used (50 if PAL, 60 if NTSC).

To achieve correct shooting (without over/underexposure phenomena) it is necessary to suitably set the "time" and "diaphragm aperture" parameters according to the brightness of the object to be shot. These two settings are mutually interdependent, so that it is always possible to find a pair of values for "time" and "diaphragm aperture" that will permit a correct exposure. This means that, the brightness of the object being equal, correct exposure may be achieved both with a long time and reduced aperture and vice versa. However, whereas the "time" parameter influences only the quality of exposure, the "diaphragm aperture" parameter also influences the depth of field, i.e. the distance within which the image is still focused. It therefore becomes necessary to set first of all the diaphragm aperture based on the desired depth of field and then the opening time.

In a professional television studio, where scenes are artificially lit, the camera opening times typically vary between 1 ms and 20 ms. Practically speaking, in the standard PAL format, a television camera always performs 50 scans per second, but each pulse has a variable duration corresponding to the diaphragm opening time; therefore, the functioning thereof is comparable to a 50 Hz modulation.

An evident drawback of known solutions, which use high efficiency LEDs at a fixed frequency of 80 Hz or greater, is the considerable variability in brightness due to the beats between the LED emission frequency and the scanning frequency of the camera. This situation is extremely disadvantageous in cases where the complete operating period of the LED (i.e. the sum of the "on" time and the "off" time) is longer than the camera diaphragm opening time. Indeed, if the diaphragm opening time falls completely within the LED "on" time, frames with maximum brightness will be obtained. On the other hand, if the diaphragm opening time falls completely within the LED "off" time frames with zero brightness will be obtained. Obviously, falling between these two extreme situations there will be other frames with variable brightness. Unlike the human eye, which takes an average of the various frames, the camera perceives these variations as flicker, i.e. a random and continual variation in LED brightness. In particular, in these situations where frames with maximum or zero brightness may occur, one speaks of "maximum flicker".

A second drawback of the known art derives from the fact that the frequency of the LED is fixed whereas the diaphragm opening time may vary within a predefined range, according to the scene to be shot (typically between 1 ms and 20 ms for shooting scenes in television studios with artificial lighting). This results in a further discontinuity in brightness, given that the emission frequency of the LED cannot be adapted to the scanning frequency of the camera.

The object of the present invention is to overcome the aforesaid drawbacks and provide a lighting device for use with a camera such as to completely eliminate or reduce flicker compared to the condition of maximum flicker.

Another object of the present invention is to provide a lighting device for use with a camera that is capable of adapting the emission frequency of the LED to the scanning frequency of the camera, which may vary within a range of values.

Said objects are fully achieved by the lighting device for use with a camera to which the present invention relates, and which comprises the characteristics described in claim 1 and in the subsequent claims.

These and other objects will become more apparent from the following description of a preferred embodiment, illustrated solely by way of non-restrictive example in the appended drawings, in which:
- figure 1 illustrates a block diagram of lighting device for use with a camera according to the present invention;
- figures 2 and 3 illustrate the waveforms of signals relative to the device of figure 1;
- figure 4 illustrates the waveforms of signals relative to a known device according to the state of the art.

With reference to the figures, 1 indicates a lighting device for use with a camera 2, in particular for the artificial lighting of indoor environments such as professional television studios or stages.

The device 1 comprises a light source 3, which is provided with at least one high efficiency LED 4. The brightness of the LED 4 can be adjusted by modifying the current flowing through the LED 4 itself.

The device 1 further comprises a modulated signal 5, necessary to drive the light source 3. The modulated signal 5 is a signal of the digital type, or a pulse width modulation signal.

Since the brightness of the LED 4 depends on the current, the modulated signal 5 is preferably a pulse current signal of maximum current and variable duration (hence variable duty cycle).

The device 1 also comprises power supply and control means 6 suitable for powering the light source 3 and generating the modulated signal 5. Advantageously, the power supply and control means 6 regulate the modulated signal 5 so that the period thereof is always equal to or less than diaphragm opening time 7 of the camera 2. Preferably, the minimum opening time 7 of the diaphragm is equal to the period of the modulated signal 5 multiplied by a coefficient greater than or equal to 2. Preferably, said coefficient is an integer.

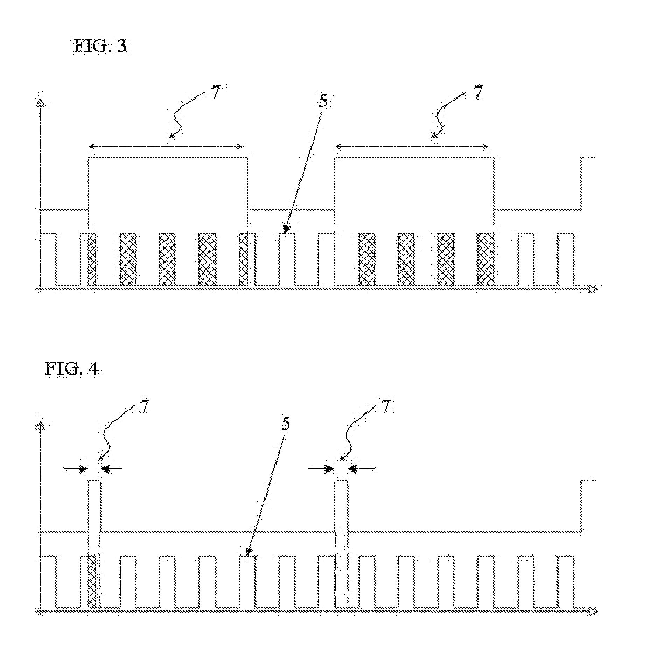

Figure 4 illustrates, according to the known art, the relation between the diaphragm opening time 7 and the period of the modulated signal 5 for two frames. The shaded area of the modulated signal 5 indicates the portion of the "on" time of the LED 4 falling within the diaphragm opening time 7 of the camera 2. In the second frame, the diaphragm opening time 7 falls entirely within the "off" time of the LED 4 (condition of maximum flicker).

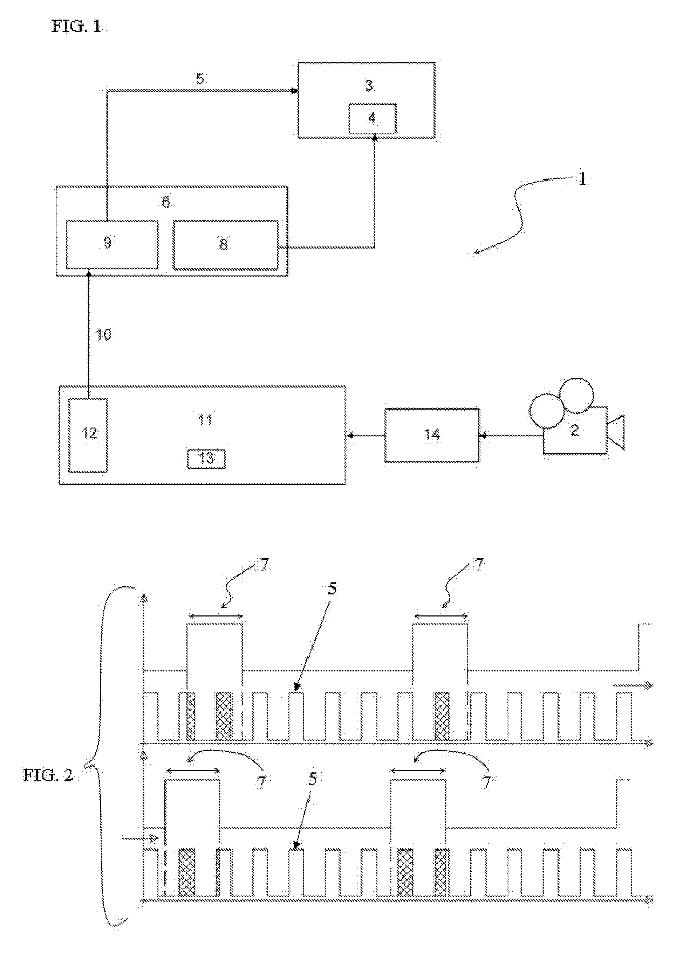

Figure 2 refers to a ratio between the diaphragm opening time 7 and the period of the modulated signal 5 equal to 1.5. The position of the shaded areas of the modulated signal 5 within the diaphragm opening time 7 varies for the four consecutive frames illustrated. Moreover, the sum of the shaded areas relative to each frame is also variable, thus indicating a variable average brightness. Practically speaking, a beat (commonly known also by the name "aliasing") is created between the operating frequencies of the LED 4 and the camera 2. This beat is responsible for a sensation of flicker, which is however less pronounced compared to the condition of maximum flicker shown in figure 4.

Figure 3 refers to a ratio between the diaphragm opening time 7 and the period of the modulated signal 5 equal to 4. Though the signals are not synchronised, the sum of the shaded areas of the modulated signal 5 within the diaphragm opening time 7 is constant for each frame, indicating a constant average brightness (absence of flicker).

In the situations described and illustrated, the LED 4 has a fixed brightness level of 40%. Obviously, if this percentage were modified the sum of the shaded areas relative to the individual frames would vary accordingly and the perception of flicker would also be more or less intense (with an ideal brightness level of 100%, no flicker would ever occur).

The modulated signal 5 can be varied in discrete frequency steps, i.e.: 300-600-1000-1500-2000-2500-3000-3500-4000-4500-5000 Hz or linearly from 300 to 5000 Hz.

Preferably, the power supply and control means 6 comprise a power supply unit 8 serving to supply voltage to the light source 3. Moreover, said means 6 comprise a signal generator 9 serving to produce the modulated signal 5.

The signal generator 9 is driven by a digital signal 10, which is transmitted by cable or wirelessly and is set from a remote controller 11 comprising a dedicated channel 12. Preferably, in new generation controllers a specific channel 12 is used. Said digital signal 10 serves to set the duty cycle of the modulated signal 5, i.e. the duration of the emission pulse of the LED 4.

A first embodiment (not illustrated) envisages direct setting by the user of the period (i.e. frequency) of the modulated signal 5. This setting is achieved by means of a switch applied on the light source 3.

A second embodiment envisages that the controller 11 is accessible to the user in such a manner that the digital signal 10 is varied with a manual command from the user himself, effected by means of an adjustment knob 13.

A third embodiment presupposes, in contrast, an automatic functioning of the controller 11. Preferably, the device 1 comprises a detection sensor 14 associated with the camera 2 and connected to the controller 11. Said sensor 14 is capable of detecting the diaphragm opening time 7 of the camera 2. On the basis of the opening time 7, the controller 11 will set the correct value of the digital signal 10.

The lighting device for use with a camera according to the present invention substantially works as follows.

In the first embodiment, the user, based on the minimum opening time 7 of the diaphragm, sets the period of the modulated signal 5 by means of a switch applied on the light source 3.

In the second embodiment, the user, based on the minimum opening time 7 of the diaphragm, sets the digital signal 10 by turning the knob 13 of the remote controller 11.

In the third embodiment, the sensor 14 detects the minimum opening time 7 of the diaphragm of the camera 2 and, on the basis thereof, the controller 11 sets the digital signal 10.

The digital signal 10 is input to the signal generator 9, which produces the modulated signal 5 of a digital type.

The modulated signal 5 regulates the current of the LED 4 so that the period of the modulated signal 5 is always equal to or less than the diaphragm opening time 7.

From the description provided, the characteristics of the lighting device for use with a camera according to the present invention emerge clearly, as do the advantages thereof.

In particular, thanks to the fact that the period of the modulated signal is always equal to or less than the diaphragm opening time, flicker is completely eliminated or reduced compared to the condition of maximum flicker.

Furthermore, the emission frequency of the LED is variable and may thus be adapted to the diaphragm opening time in order to guarantee a substantially constant brightness even in the case of variability in the opening time.

## Claims

1. Lighting device (1) for use with a camera (2) comprising:
a light source (3);
a modulated signal (5) of a digital type for driving the light source (3);
power supply and control means (6) for powering the light source (3) and generating the modulated signal (5),
**characterised in that** said power supply and control means (6) regulate the modulated signal (5) in such a manner that the period of the modulated signal (5) is always equal to or less than the opening time (7) of the diaphragm of the camera (2).

2. Device (1) according to claim 1, **characterised in that** the light source (3) comprises at least one high efficiency LED (4).

3. Device (1) according to claim 2, **characterised in that** the modulated signal (5) regulates the brightness of the LED (4) by changing the current flowing through the LED (4) itself.

4. Device (1) according to claim 1, **characterised in that** the power supply and control means (6) comprise a power supply unit (8) serving to supply voltage to the light source (3) and a signal generator (9) serving to produce the modulated signal (5).

5. Device (1) according to claim 4, **characterised in that** the signal generator (9) receives an incoming digital control signal (10).

6. Device (1) according to claim 5, **characterised in that** the digital signal (10) is set from a remote controller (11).

7. Device (1) according to claim 6 **characterised in that** the remote controller (11) is accessible to a user so that the digital signal (10) may be changed via a manual command by the user.

8. Device (1) according to claim 6, **characterised in that** it comprises a sensor (14) for detecting the opening time (7) of the diaphragm of the camera (2), said sensor (14) being connected to the remote controller (11) for the purpose of varying the digital signal (10).

9. Device (1) according to claim 6, **characterised in that** the remote controller (11) comprises a dedicated channel (12) for setting the digital signal (10).

10. Device (1) according to claim 1, **characterised in that** the minimum opening time (7) of the diaphragm of the camera (2) is equal to the period of the modulated signal (5) multiplied by a coefficient greater than or equal to 2.

11. Device (1) according to claim 1, **characterised in that** the minimum opening time (7) of the diaphragm of the camera (2) is equal to the period of the modulated signal (5) multiplied by an integer coefficient.
